Europäisches Patentamt

European Patent Office

Office européen des brevets

(11) Numéro de publication : **0 013 841**
**B1**

# (12) FASCICULE DE BREVET EUROPÉEN

(45) Date de publication du fascicule du brevet :
**19.05.82**

(51) Int. Cl.³ : **B 60 T 7/20**

(21) Numéro de dépôt : **79400208.9**

(22) Date de dépôt : **02.04.79**

(54) **Dispositif mécanique à commande par inertie permettant le recul du véhicule tracté sans freinage sur les roues.**

(30) Priorité : **30.01.79 FR 7903154**

(43) Date de publication de la demande :
**06.08.80 (Bulletin 80/16)**

(45) Mention de la délivrance du brevet :
**19.05.82 Bulletin 82/20**

(84) Etats contractants désignés :
**BE CH DE GB IT LU NL SE**

(56) Documents cités :
**DE - A - 2 005 792**
**DE - A - 2 325 860**
**FR - A - 2 301 421**

(73) Titulaire : **S.A. THIBAULT-ESSIEUX R.T.N.**
**Z.I.-Route de Tours**
**F-49490-Noyant (FR)**

(72) Inventeur : **Thibault, Robert**
**8, Bd des Ecoles**
**F-49490 Noyant (FR)**
Inventeur : **Thibault, Jean-Claude**
**4, Bd des Ecoles**
**F-49490 Noyant (FR)**
Inventeur : **Thibault, Alain**
**11, Cité les Rosiers**
**F-49490 Noyant (FR)**

(74) Mandataire : **Collignon, Pierre et al**
**Cabinet Collignon 6, rue de Madrid**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Dispositif mécanique à commande par inertie permettant le recul du véhicule tracté sans freinage sur les roues

La présente invention concerne tous les attelages de véhicules tractés à freinage par inertie et elle a pour objet le déverrouillage et le verrouillage automatiques du véhicule tracté suivant l'utilisation en marche avant ou en marche arrière.

Dans les dispositifs connus, la manœuvre de marche arrière implique un verrouillage du frein du véhicule tracté :

— soit manuellement par mise en place d'un cliquet ;

— soit électriquement toujours par la mise en place d'un cliquet (comme décrit par exemple dans le document FR-A-2 301 421) ;

— soit par un système à ressort sollicité en marche arrière par le frottement du tambour de frein sur le segment.

Dans un autre dispositif (voir le document DE-A-2 005 792) il est déjà connu d'employer une masselotte dont on utilise l'inertie pour freiner une remorque de véhicule, mais il s'agit alors d'un dispositif électrique et non pas mécanique de commande des freins de la remorque.

Le dispositif selon la présente invention supprime toute intervention manuelle et tout danger de panne électrique.

Les mouvements nécessaires au bon fonctionnement de ce dispositif sont déclenchés par l'inertie des masselottes sollicitées soit au moment du freinage ou du ralentissement du véhicule tracteur, soit au démarrage en marche arrière. Il permet la validation du freinage d'une remorque tractée en marche avant, ou l'invalidation de ce freinage pour effectuer une marche arrière, sans intervention manuelle ou mécanique.

Le dispositif tel qu'illustré sur les dessins utilise dans sa manœuvre l'inertie de deux masselottes agissant sous l'impulsion du mouvement du véhicule tracteur. Il est composé :

A. d'un ensemble de deux masselottes (1) reliées entre elles par trois axes :

— un axe supérieur (2) servant d'articulation à un levier supérieur (5),

— un axe intermédiaire (3) servant de limiteur de course à un cliquet inférieur (7),

— un axe inférieur (4) servant d'articulation au cliquet inférieur (7).

B. du levier supérieur (5) suspendu au boîtier (6) solidaire de la tête d'attelage,

C. du cliquet inférieur (7) de forme étudiée spécialement permettant le verrouillage ou le déverrouillage de la commande de frein du véhicule tracté.

Cette invention peut équiper tous les systèmes d'attelage à commande de frein par inertie ou tout autre système demandant un verrouillage : caravaning, remorques légères, remorques à bateaux, remorques routières ou agricoles etc...

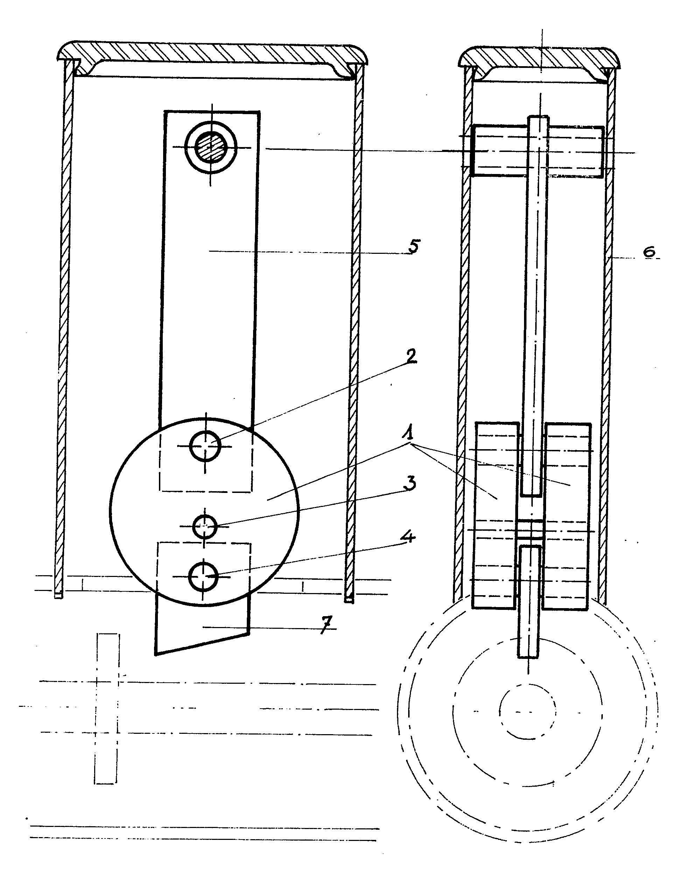

**Revendications**

1. Dispositif permettant automatiquement la validation en marche avant du freinage d'un véhicule tracté à freinage par inertie et l'invalidation de ce freinage pour effectuer une marche arrière, au moyen d'un cliquet permettant le verrouillage et le déverrouillage mécaniques de la commande de frein, caractérisé par ceci qu'il comprend des masselottes (1) suspendues, par l'intermédiaire d'un levier (5), à l'intérieur d'un boîtier (6) solidaire de la tête d'attelage et dont l'inertie permet les mouvements nécessaires au bon fonctionnement de l'ensemble, et que les masselottes (1) sont reliées ensemble par au moins deux axes parallèles comprenant un axe inférieur (4) servant d'articulation au cliquet (7) assurant le verrouillage ou le déverrouillage de la commande de frein et un axe intermédiaire (3) agissant comme limiteur de course pour le cliquet inférieur (7).

2. Dispositif selon la revendication 1, caractérisé par ceci que les masselottes (1) sont reliées au levier (5) par un axe d'articulation (2) parallèle à l'axe intermédiaire (3) et disposé au-dessus de celui-ci.

**Claims**

1. A device which automatically renders operative the braking system of a towed vehicle having inertia brakes during forward travel and inoperative so that the vehicle can travel in reverse, the device employing a ratchet means permitting of mechanical locking and unlocking of the brake control means, characterised in that it comprises drop weights (1) suspended by means of a lever (5) inside a casing (6) rigid with the towing hook and the inertia of which permits of the movements required for satisfactory functioning of the assembly, and in that the drop weights (1) are connected to one another by at least two parallel spindles comprising a lower spindle (4) serving for articulation on the ratchet (7) and providing for locking or unlocking of the brake control means and an intermediate spindle (3) acting as a travel limiter for the lower ratchet (7).

2. A device according to Claim 1, characterised in that the drop weights (1) are connected to the lever (5) by an articulating spindle (2) parallel with the intermediate spindle (3) and disposed above this latter.

**Ansprüche**

1. Vorrichtung zum automatischen Einschalten des Vorwärtsganges bei einem Fahrzeuganhänger mit Trägheitsbremsung, und zum Ausschalten dieser Bremsung für die Rückwärtsfahrt, jeweils mit Hilfe einer Sperrklinke, welche die mechanische Verriegelung und Entriegelung der Bremsensteuerung ermöglicht, dadurch gekennzeichnet, daß sie Reguliergewichte (1) aufweist, welche mit Hilfe eines Hebels (5) im Inneren eines mit dem Kupplungskopf fest verbundenen Gehäuses aufgehängt sind und deren Trägheit die zur einwandfreien Arbeitsweise der gesamten Vorrichtung erforderlichen Bewegungen ermöglicht, und daß die Reguliergewichte (1) mittels zwei oder mehr parallelen Achsen miteinander verbunden sind, wovon eine untere Achse (4) zur Anlenkung an der Sperrklinke (7) dient, welche die Verriegelung bzw. Entriegelung der Bremssteuerung sicherstellt, während eine in der Mitte liegende Achse (3) als Wegbegrenzung für die unten liegende Sperrklinke (7) dient.

2. Vorrichtung nach Anspruch 1, dadurch gekennzeichnet, daß die Reguliergewichte (1) mittels einer zu der in der Mitte liegenden Achse (3) parallelen und oberhalb derselben angeordneten Anlenkachse (2) mit dem Hebel (5) verbunden sind.